# EUROPÄISCHE PATENTSCHRIFT

(11) **EP 1 330 686 B1**
(45) Veröffentlichungstag und Bekanntmachung des Hinweises auf die Patenterteilung: **27.12.2006**
(21) Anmeldenummer: 01976213.7
(22) Anmeldetag: 11.09.2001
(51) Int. Cl.: G05B 19/401

(54) **VERFAHREN ZUM GENERIEREN EINES MESSPROGRAMMES FÜR EIN KOORDINATENMESSGERÄT**
METHOD FOR GENERATING A MEASURING PROGRAM FOR A CO-ORDINATE MEASURING DEVICE
PROCEDE POUR GENERER UN PROGRAMME DE MESURE DESTINE A UN APPAREIL DE MESURE DE COORDONNEES

(30) Priorität: 15.09.2000 DE 10046153
(43) Veröffentlichungstag der Anmeldung: 30.07.2003
(73) Patentinhaber: Werth Messtechnik GmbH, 35394 Giessen (DE)
(72) Erfinder: CHRISTOPH, Ralf, 35641 Schöffengrund (DE)
(74) Vertreter: Stoffregen, Hans-Herbert
(86) Internationale Anmeldenummer: PCT/EP2001/010471
(87) Internationale Veröffentlichungsnummer: WO 2002/023292

(56) Entgegenhaltungen:
- EP-A- 0 431 572
- EP-A- 0 879 674
- US-A- 4 901 253
- US-A- 5 465 221
- WOCKE P: "KMG AUTOMATISCH PROGRAMMIEREN GENERIERUNG, VISUALISIERUNG UND MODIFIZIERUNG VON ANTASTPUNKTEN UND VERFAHRWEGEN" F & M. FEINWERKTECHNIK MIKROTECHNIK MESSTECHNIK, CARL HANSER GMBH, MUNCHEN, DE, Bd. 102, Nr. 4, 1. April 1994 (1994-04-01), Seiten 181-186, XP000446402 ISSN: 0944-1018
- WILHELM M C ET AL: "KOORDINATENMESSGERATE IM CAD-UMFELD PROGRAMMIEREN" VDI Z, VDI VERLAG GMBH. DUSSELDORF, DE, Bd. 135, Nr. 10, 1. Oktober 1993 (1993-10-01), Seiten 97-100, XP000398917 ISSN: 0042-1766

## Beschreibung

Die Erfindung bezieht sich auf ein Verfahren zum Generieren eines Messprogramms für ein zumindest einen Bildverarbeitungssensor umfassendes Multisensor-Koordinatenmessgerät, wobei
- in einer das Koordinatenmessgerät steuernden Datenverarbeitungseinrichtung ein Soll-Datensatz wie CAD-Datensatz eines zu messenden Objekts eingelesen wird,
- zum Erzeugen des Messprogramms der Soll-Datensatz als Prüfplan derart automatisch abgearbeitet wird, dass aufgrund von in der Datenverarbeitungseinrichtung abgelegter vordefinierter Regeln in dem Prüfplan definierte Maße wie Abstände oder Winkel und/oder geometrische Eigenschaften als Werte automatisch abgearbeitet werden und
- die Reihenfolge der zu prüfenden Maße und/oder Geometrieelemente des Objekts automatisch aus Zeichnungsdaten des Soll-Datensatzes generiert wird.

Aus der Literaturstelle DE-Z.: WOCKE P.: "KMG - AUTOMATISCH PROGRAMMIEREN - GENERIERUNG, VISUALISIERUNG UND MODIFIZIERUNG VON ANTASTPUNKTEN UND VERFAHRWEGEN" F & M. FEINWERKTECH-NIK MIKROTECHNIK MESSTECHNIK,CARL HANSER GmbH, MÜNCHEN, DE, Bd. 102, Nr. 4, 1. April 1994, Seiten 181 - 186, XP000446402, ISSN: 0944-1018, ist ein Verfahren zum Generieren eines Messprogramms für ein Koordinatenmessgerät bekannt, wobei in einer das Koordinatenmessgerät steuernden Datenverarbeitungseinrichtung ein CAD-Datensatz eines zu messenden Objekts eingelesen wird und in dem Datensatz definierte geometrische Eigenschaften automatisch abgearbeitet werden. Dabei besteht die Möglichkeit, dass der Bediener individuell das Messprogramm modifiziert.

Aus der US-A-5,465,221 ist ein Verfahren zum automatischen Abarbeiten von geometrischen Eigenschaften eines zu messenden Objekts bekannt. Die Messprogrammgenerierung erfolgt dabei durch Einfließen der Erfahrungen des Bedieners.

Es ist bekannt, Koordinatenmessgeräte unter zu Hilfenahme von CAD-Daten zu progrannmieren (s. z.B. Quality Engineering 5/00, S. 52: Messprogramme per Mausklick, DE 195 05 155 A1, Flexible Automation, 2/97, "Flinker lnspector" oder Industrie Meister Nr. 7/8, August 1997, "Die neue Dimension in der Koordinatenmesstechnik" von Werth Messtechnik GmbH, Gießen). Mit den beschriebenen Verfahren sollen die zur Verfügung stehenden CAD-Daten zur interaktiven Programmierung von Koordinatenmessgeräten durch den Bediener herangezogen werden. Nach manueller Anwahl von Merkmalen oder Geometrieelementen werden hierzu vorliegende Daten aus dem CAD-Modell zum Positionieren der Maschine berücksichtigt. Nachteil der entsprechenden Verfahren ist es, dass der Bediener alle erforderlichen Entscheidungen zur Generierung des Prüfplans wie z. B. Reihenfolge der zu prüfenden Merkmale oder Festlegung von Messstr3tegien und Ausrichtungen von sich aus bedenken und programmieren muss. Alle Informationen, die nicht von vornherein im CAD-File enthalten sind und für die erfolgreiche Abarbeitung des Prüfplans erforderlich sind, muss der Bediener von sich aus in Aktionen am Koordinatenmessgerät umwandeln. Dies führt insbesondere bei weniger erfahrenen Nutzern zu Fehlbedienungen. Z.B. kann das Vergessen eines Ausrichtvorganges zu zwar plausiblen aber dennoch falschen Maßen führen. Der Bediener ist gezwungen, den Überblick über den gesamten Prüfplan jederzeit zu behalten, da man sich letztendlich nur manuell mit der Unterstützung der CAD-Daten in willkürlicher Reihenfolge durch die Aufgabenstellung arbeitet. Alle Aktionen werden grundsätzlich vom Bediener manuell ausgelöst. Der Bediener programmiert mit CAD-Unterstützung.

Der vorliegenden Erfindung liegt das Problem zu Grunde, ein Verfahren der eingangs genannten Art so weiterzubilden, dass ein mit einem Koordinatenmessgerät durchzuführender Prüfablauf zum Messen von insbesondere Objekten einer Serie automatisiert wird.

Erfindungsgemäß wird das Problem durch die Maßnahmen des Anspruchs 1 gelöst.

Erfindungsgemäß wird ein Soll-Datensatz, also ein solcher, der Sollgeometrien und gegebenenfalls Zusatzinformationen, die den Einsatz bestimmter Sensoren für bestimmte Geometrien, Messunsicherbeiten, Toleranzen, Messstrategien etc. enthält, bei dem es sich auch um ein CAD-Datensatz im herkömmlichen Sinne handeln kann, durch ein Koordinatenmessgerät in der Weise automatisch als Prüfplan abgearbeitet, dass alle in diesem definierten Maße und/oder geometrischen Eigenschaften vollautomatisch anhand vordefinierter Regeln gemessen werden und in dem Soll-Datensatz nicht definierte Randbedingungen im Bedarfsfall durch das Koordinatenmessgerät bzw. dessen Hard-/Software beim Bediener abgefragt werden.

Insbesondere ist vorgesehen, dass dem -Bediener die mögliche Auswahl der zur Verfügung stehenden Entscheidungen durch das Koordinatenmessgerät bzw. dessen Soft/Hardware zur Wahl vorgelegt werden. Dabei können alle notwendigen Informationen zur Abarbeitung des Prüfplanes vorab zusätzlich in dem Soll-Datensatz wie CAD-Datensatz oder ein separates Datenfile eingegeben werden.

Dem erfindungsgemäßen Verfahren liegt im Vergleich zum Stand der Technik eine Umkehrung der Abhängigkeiten zugrunde. Die Software des Koordinatenmessgerätes ist so gestaltet, dass diese von sich aus Merkmale oder Geometrieelemente zur Messung aus dem Datenfile auswählt. Für die automatische Festlegung der Reihenfolge werden Algorithmen in der Koordinatenmesssoftware hinterlegt, wie z. B. Sortierung nach geometrischem Ort (z.B. von oben links nach unten rechts) oder Sortierung nach Größe des Merkmals oder Sortierung nach Art des Merkmals (z. B. bei 2 Dimensionen: Kreis, Gerade; bei 3 Dimensionen: Kugel, Torus, Zylinder) oder Sortierung nach Lage des Merkmals (horizontale Ebenen, vertikale Ebenen) oder Sortierung nach Messschnelligkeit oder Sortierung nach Messunsicherheit, um nur einige Beispiele zu nennen.

Die insbesondere bei Multisensorkoordinatenmessgeräten erforderliche Sensorauswahl erfolgt ebenfalls automatisch. So können z.B. horizontale Ebenen mit einem Laser, vertikalen Ebenen mit einem Taster oder Löcher kleiner 5 mm Durchmesser mit einer Bildverarbeitung, Löcher mit Durchmesser größer 5 mm mit einem Taster oder Maße mit Toleranz kleiner 10 µm mit hoher Vergrößerung, Maße mit Toleranz 10 µm bis 20 µm mit mittlerer Vergrößerung, Maße mit Toleranz größer 20 µm mit niedriger Vergrößerung eines Bildverarbeitungssensors gemessen werden. Technologieparameter wie Antastgeschwindigkeit und Beleuchtung werden in analoger Weise an der Gestalt des Prüfplans bzw. CAD-Modells festgelegt.

Die für die oben genannten Entscheidungen notwendigen Grenzwerte werden entsprechend der Hardwarekonfiguration des Koordinatenmessgerätes wie Art der vorhandenen Taster, Art der vorhandenen Sensoren und Beleuchtungseinrichtung an diesem voreingestellt. Die Maschine arbeitet auf diese Weise vollautomatisch anhand vorgegebener Entscheidungsregeln und den im Soll- bzw. CAD-Datensatz enthaltenen Informationen den Prüfplan ab. Zusätzliche Informationen können in separaten Datenfiles wie z. B. Toleranztabellen hinterlegt sein, die übergreifend für mehrere Teile/-Prüfpläne einer Gruppe bzw. Branche genutzt werden.

Wird bei der Abarbeitung eines Prüfplans durch das Koordinatenmessgerät bzw. dessen Hard-/Software festgestellt, dass Informationen bzw. Entscheidungen - wie Messung einer Distanz in X-Richtung oder Messung als kürzester Abstand zwischen zwei Flächen - zur weiteren Abarbeitung fehlen, werden diese nach der erfindungsgemäßen Lehre beim Bediener über Auswahlmenüs abgefragt. Dem Bediener werden hierzu die möglichen Entscheidungsvarianten zur Auswahl gestellt. Hierdurch bedingt erfolgt eine Zwangsführung bei der Abarbeitung des Prüfplans. Mit anderen Worten wird ein Prüfprogramm für das Koordinatenmessgerät automatisch mit gegebenenfalls Bedienerunterstützung programmiert, wobei die Bedienerunterstützung insoweit "eingeschränkt" ist, als dass bereits Lösungsvarianten vorgegeben werden.

Ist beim Programmiervorgang bereits das zu prüfende Teil vorhanden, kann im Online-modus der entstehende Prüfplan durch den Bediener beobachtet werden. Bei Bedarf kann dieser eingreifen und Einstellparameter wie z. B. Licht ändern. Hierzu ist die Möglichkeit des schrittweise automatischen Programmierens vorgesehen. Dabei erfolgt eine schrittweise Freigabe jedes Programmierschrittes durch den überwachenden Bediener. Die Organisation des Ablaufes bleibt jedoch allein der Software des Koordinatenmessgerätes vorbehalten. Ist noch kein reales Teil vorhanden, kann auf die oben beschriebene Arbeitsweise auch im Offlinemodus der Koordinatenmesssoftware gearbeitet werden.

In Weiterbildung der Erfindung ist vorgesehen, dass Parameter zur automatischen Steuerung des Prüfplanablaufes in einem der Koordinatenmessmaschinen-Konfiguration zugeordneten Datenfile vorliegen. Parameter können dabei Toleranz, Messunsicherheit aber auch Hardware wie in der Koordinatenmessmaschine vorhandene Sensoren sein.

Ferner können Parameter zur automatischen Steuerung des Prüfplanablaufs in Teilgruppen zugeordneten Datenfiles vorliegen, wobei Teilgruppen zum Beispiel geometrische Orte, Größe des zu messenden Merkmals oder Art des Merkmals wie Kreis, Gerade bei zweidimensionalen Messungen oder Kugel, Torus oder Zylinder bei dreidimensionalen Messungen sein können.

Auch besteht die Möglichkeit, dass die Reihenfolge der zu prüfenden Merkmale und Geometrieelemente automatisch aus Zeichnungsdaten generiert wird, also solchen, die in den Soll-Daten vorhanden sind.

Alternativ besteht die Möglichkeit, die Reihenfolge der zu prüfenden Merkmale und Geometrieelemente aus der Lage am zu messenden Objekt zu generieren, also ob diese zum Beispiel in einer horizontalen oder einer vertikalen Ebene vorliegen.

Die Sensorauswahl kann automatisch aus den Soll-Daten wie CAD-Daten generiert werden. Dabei kann die Sensorauswahl aus der Orientierung von Geometrieelementen im Soll-Daten- wie CAD-Datenfile gewonnen werden.

Die zum Einsatz gelangende Vergrößerung optischer Sensoren kann wiederum aus Merkmalsgröße und/oder Toleranz generiert werden.

Aus der Größe des zu messenden Merkmals eines Objektes kann ein mechanisch schaltender Taster oder bei einem opto-taktilen Taster Durchmesser vom Tastelement wie -kugel generiert werden. Aus einer Messaufgabe wie Maß, Form, Lage und/oder Größe eines Geometrieelementes kann wiederum eine Tastpunktzahl generiert werden. Ferner kann Drehschwenkposition von Tasterdrehschwenkgelenken aus Lage und/oder Orientierung von anzutastenden Geometrieelementen automatisch ermittelt werden. Nach einem weiteren Vorschlag wird bei optischen Sensoren erforderliche Beleuchtung aus der Orientierung der Geometrieelemente und/oder aus Vorhandensein von Durchbrüchen automatisch ausgewählt und/oder eingestellt.

Bei Einsatz von mechanischen Tastern und/oder Lasertastern kann deren Antastgeschwindigkeit zur Teiletoleranz generiert werden.

Ein weiterer Vorschlag sieht vor, dass während des automatischen Programmierens, also während des Generierens des Messprogramms bereits dieses im Online-Betrieb auf dem Koordinatenmessgerät geprüft wird. Auch kann ein automatisches Generieren des Messprogramms im Offline-Modus des Koordinatenmessgerätes bzw. dessen Software erfolgen.

Zur Überwachung des Programmiervorgangs des Messprogramms kann ein schrittweises Abarbeiten erfolgen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausfuhrungsbeispielen.

Es zeigen:
- Fig. 1: eine Prinzipdarstellung eines über eine Datenverarbeitungseinrichtung gesteuertes Koordinatenmessgerät,
- Fig. 2: einen Ablaufplan eines erfindungsgemäßen Verfahrens,
- Fig. 3: eine Prinzipdarstellung zur Verdeutlichung des erfindungsgemäßen Verfahrens und
- Fig. 4: eine weitere Prinzipdarstellung zur Verdeutlichung des erfindungsgemäßen Verfahrens mit Bedienerabfrage.

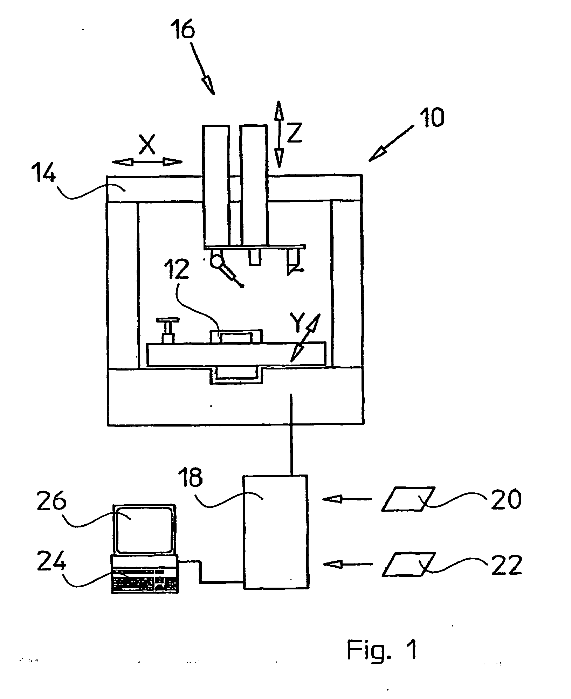

In Fig. 1 ist eine Prinzipdarstellung eines Multisensor-Koordinatenunessgerätes 10 in Portalbauweise dargestellt, mit dem ein Objekt 12 gemesen werden soll. Hierzu weist das Multisensor-Koordinatenmessgerät 10 einen entlang eines Portals 14 verschiebbaren Schlitten 16 auf, von dem nicht näher bezeichnete Pinolen mit Sensoren bzw. Sensoren an sich ausgehen, um das Objekt 12 zu messen. Bei den Sensoren kann es sich um opto-taktile Taster mit zugeordneter Bildverarbeitung, schaltende Taster, optische Sensoren wie Kameras, Lasersensoren oder mechanische Scanni.ng-Taster handeln. Insoweit wird jedoch auf hinlängliche Technologien verwiesen.

In Abhängigkeit von der Lage bzw. Geometrie von zu messenden Merkmalen des Objektes 12 sollten in Abhängigkeit von einzuhaltenden Parametern wie Toleranz, Messschnelligkeit, Messunsicherheit bzw. von zu beachtender Messstrategie unterschiedliche Sensoren bzw. eine bestimmte Nutzungsfolge dieser zum Einsatz gelangen. Erfindungsgemäß wird hierzu von dem Koordinatenmessgerät 10 bzw. einer mit diesem verbundenen Datenverarbeitungseinrichtung 18 automatisch ein Messprogramm generiert. Hierzu wird in die Datenverarbeitungseinrichtung 18 ein objektspezifischer Soll-Datensatz 20 wie CAD-Datensatz des zu messenden Objektes 12 eingelesen, wobei der Sollwert-Datensatz 20 als Prüfplan derart automatisch abgearbeitet wird, dass aufgrund von in der Datenverarbeitungseinrichtung 18 abgelegter vordefinierter Regeln 22, die auch koordinatenmessgerätspezifische Daten berücksichtigen, in dem Prüfplan, also dem Soll-Datensatz 20 definierte Maße und/oder geometrische Eigenschaften des Objektes automatisch abgearbeitet werden, um sodann das so erzeugte Messprogramm zum Messen des Objektes 12 oder eines entsprechenden Objektes mittels des Koordinatenmessgerätes 10 durchführen zu können. Dabei besteht die Möglichkeit, dass bei . Fehlen vordefinierter Regeln für durch den Prüfplan definierte Maße und/oder geometrische Eigenschaften eine Bedienerabfrage erfolgt. Hierzu ist die Datenverarbeitungseinrichtung 18 mit einer entsprechenden Tastatur 24 und einem Monitor 26 verbunden. Dabei werden dem Bediener mögliche Entscheidungsvarianten zur Auswahl gegeben, so dass infolgedessen eine Zwangsführung bei der Abarbeitung des Prüfplans erfolgt. Die Bedienerunterstützung ist folglich eingeschränkt, da nur bestimmte Lösungsvarianten vorgegeben werden, die bei der Generierung des Messprogrammes sodann berücksichtigt werden.

In der Datenverarbeitungseinrichtung 18 erfolgt ein automatisches Abarbeiten des durch den Soll-Datensatz 20 vorgegebenen Prüfplans unter Berücksichtigung der als Konfigurationsdatensatz zu bezeichnenden vordefinierten Regeln oder Algorithmen 22, um automatisch das Messprogramm zu generieren.

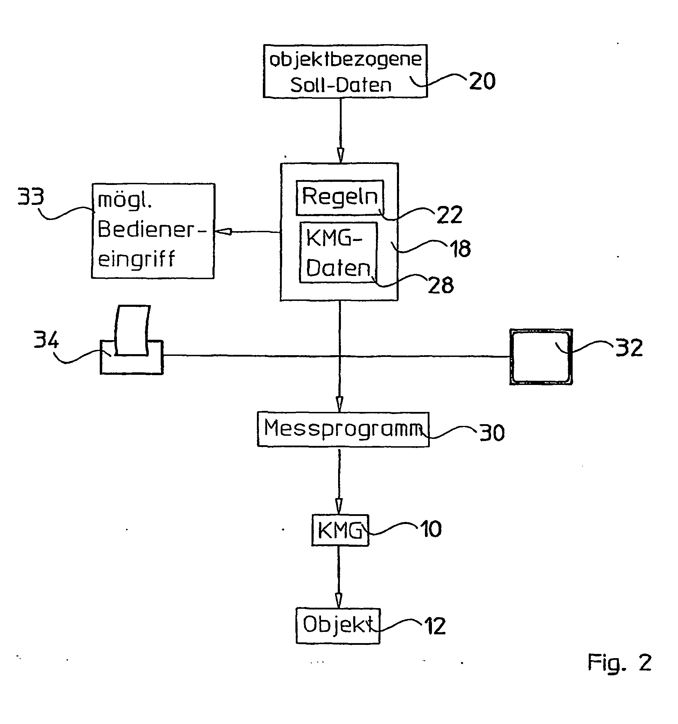

Dieser Ablaufplan wird noch einmal in Fig. 2 verdeutlicht.

So werden in die Datenverarbeitungseinrichtung 18 objektbezogene Soll-Daten, bei denen es sich um einen CAD-Datensatz für ein zu messendes Objekt, insbesondere eine Serie von zu messenden gleichen Objekten handeln kann, eingelesen. In der Datenverarbeitungseinrichtung 18 sind außerdem die vordefinierten Regeln 22 sowie koordinatenmessgerätspezifische Daten 28 abgelegt.

In der Datenverarbeitungseinrichtung 18 werden sodann die durch die objektbezogenen Soll-Daten 20 definierten Maße und/oder geometrische Eigenschaften der zu messenden Objekte unter Berücksichtigung der vordefinierten Regeln 22 sowie der koordinatenmessgerätspezifischen Daten 28 abgearbeitet, um so ein Messprogramm 30 automatisch zu erzeugen, mittels dessen das Koordinatenmessgerät 10 zum Messen des Objektes 12 gesteuert wird. Dabei kann bei Fehlen vordefinierter Regeln zum Messen objektspezifischer Merkmale ein Bedienereingriff 32 erfolgen, wie zuvor erläutert wird. Während , des automatischen Programmierens kann bereits ein Teil im Online-Betrieb auf dem Koordinatenmessgerät 10 geprüft werden. Eine bildliche Darstellung des Messprogramms auf einem Monitor 32 bzw. ein Herausdrucken des Programms über einen Drucker 34 ist selbstverständlich möglich.

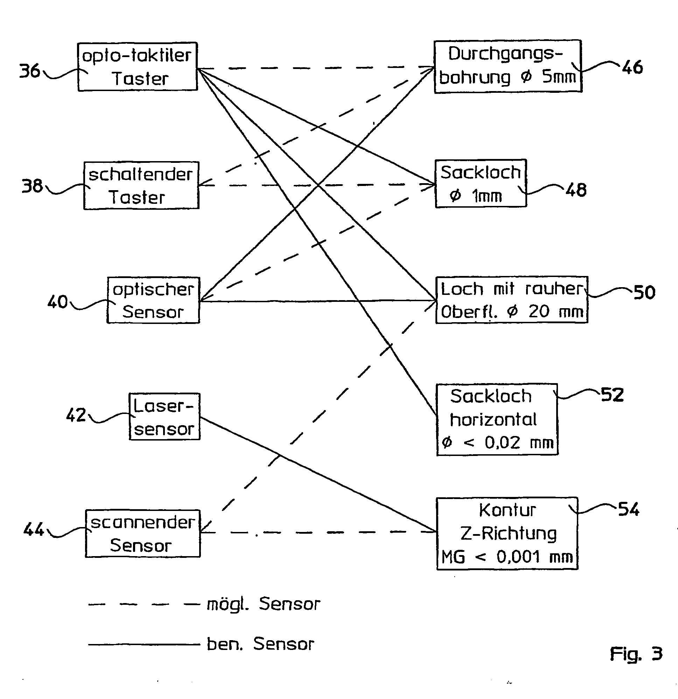

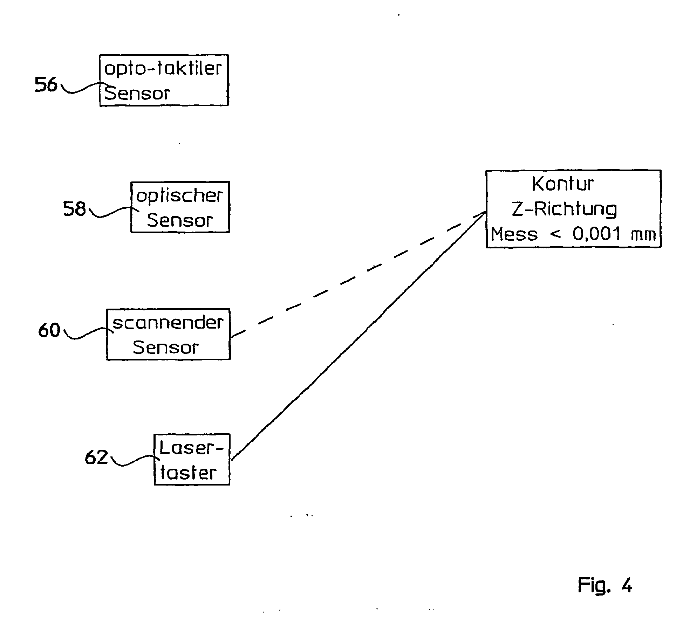

Anhand der Fig. 3 und 4 soll das Prinzip der erfindungsgemäßen Lehre erläutert werden, und zwar anhand von dem Prüfplan zu entnehmenden auszumessenden Löchern bzw. Objektkonturen.

Anhand des erläuterten Beispiels gemäß Fig. 3 umfasst das Multisensorkoordinatenmessgerät, für das ein Messprogramm generiert wird, als Sensoren einen opto-taktilen Sensor 36, wie dieser zum Beispiel der WO 98/57121 zu entnehmen ist, einen mechanisch schaltenden Taster 38, einen optischen Sensor wie Kamera 40, einen Lasersensor 42 sowie einen mechanisch scannenden Sensor 44.

Soll eine Durchgangsbohrung 46 mit einem Lochdurchmesser 5 mm gemessen werden, so kommen aufgrund der in der Datenverarbeitungseinrichtung 16 abgelegten koordinatenmessgerätspezifischen Daten der opto-taktile Taster 36, der schaltende Taster 38 und der optische Sensor 40 als Messsensoren in Frage.

Ist nun in einem gesonderten Datenfile bzw. einer zusätzlichen Information in den objektbezogenen Soll-Daten 20 zusätzlich ein Messparameter abgelegt, nach dem Durchgangsbohrungen in einem Durchmesserbereich von 4 - 6 mm mit hoher Messgeschwindigkeit zu messen sind, so wird aufgrund der die vordefinierten Regeln 22 enthaltenen Daten automatisch der optische Sensor 40 ausgesucht und in dem generierten Messprogramm 30 berücksichtigt.

Soll im Ausführungsbeispiel der Fig. 3 ein Sackloch 48 mit einem Durchmesser von 1 mm gemessen werden, kommen als mögliche Sensoren der opto-taktile Taster 36, der mechanisch schaltende Taster 38 sowie der optische Sensor, 40 in Frage. Ist die Nebenbedingung "Messung mit höchster Genauigkeit" bei Sacklöchern im Durchmesserbereich zwischen 0,1 und 1,5 mm z. B. in einem gesonderten Datenfile oder als Zusatzinformation in den Soll-Daten vorgegeben, so wird aufgrund der vordefinierten Regeln 22 automatisch der opto-taktile Taster 36 berücksichtigt und im Messprogramm 30 abgelegt.

Sofern ein Durchmesser eines Lochs 50 im. Abstand zum oberen Rand mit einem Durchmesser von 20 mm gemessen werden soll, so kämen als Sensoren der opto-taktile Taster 36, der optische Sensor 40 sowie der Scanning-Sensor 44 in Frage. Ist dem Prüfplan die zusätzliche Information zu entnehmen oder zugeordnet, dass das entsprechende Loch eine rauhe Oberfläche aufweist, wird aufgrund der vordefinierten Regeln automatisch der optische Sensor 40 in dem zu generierenden Messprogramm 30 berücksichtigt.

Bei der Messung eines Sackloches 52, das horizontal verläuft und einen Durchmesser kleiner als 0,02 mm aufweist, wird automatisch der opto-taktile Taster 36 im Messprogramm 30 berücksichtigt.

Zur Messung einer Kontur 54 in Z-Richtung des Objektes kämen der Lasersensor 42 und der Scanning-Sensor 44 in Frage. Ist die Nebenbedingung Messungenauigkeit kleiner 1 µ zu berücksichtigen, so wird automatisch der Lasersensor 42 im Messprogramm 30 aufgenommen.

Bei dem Ausführungsbeispiel der Fig. 4 sind die Daten eines Koordinatenmessgerätes in dem Recher bzw. der Datenverarbeitungseinrichtung 18 abgelegt, der drei Sensoren, nämlich einen opto-taktilen Sensor 56, einen optischen Sensor 58 sowie einen Scanning-Sensor 60 umfasst.

Ist dem vom Recher eingelesenen Prüfplan bzw. Soll-Datensatz wie CAD-Datensatz als messendes Merkmal "Kontur in Z-Richtung" vorgegeben, so würde unter Berücksichtigung der abgelegten vordefinierten Regeln automatisch der Scanning-Sensor 60 berücksichtigt. Ist jedoch zusätzlich die Information Messen mit "Messungenauigkeit kleiner 1 µ" in einem gesonderten File oder als zusätzliche Information dem Prüfplan zu entnehmen, so würde aufgrund der abgelegten vordefinierten Regeln dem Bediener die Möglichkeit angeboten, die Messung mit der gewünschten Messungenauigkeit mittels eines Lasertasters 62 durchzuführen. Würde der Bediener diesem Vorschlag zustimmen, so müsste entsprechend das Koordinatenmessgerät nachgerüstet werden, um sodann entsprechend des generierten Messprogramms, also unter Berücksichtigung der Bedienereingabe einen Messzyklus zu durchfahren. Dabei ist der Bediener jedoch nicht frei in der Eingabe von Daten. Vielmehr werden dem Bediener Entscheidungsvarianten zur Auswahl gestellt, aus denen ausgewählt werden kann.

Anhand der Fig. 4 wird demnach verdeutlicht, dass dann, wenn eine Messaufgabe mit den verwendeten Sensoren nicht möglich ist, sich also eine nicht definierte Randbedingung einstellt, dieses Problem im Online-Modus durch den Bediener gelöst werden kann. Dies kann dadurch erfolgen, dass entweder die Messaufgabe übersprungen wird (Auslassen von Geometriedaten) oder der Bediener selbst gibt - wie anhand der Fig. 4 erläutert - einen anderen Sensor ein. Wird ein anderer Sensor berücksichtigt als ein vorgegebener, so wird automatisch durch die abgelegten Programme der Messablauf abgeändert.

## Patentansprüche

1. Verfahren zum Generieren eines Messprogramms (30) für ein zumindest einen Bildverarbeitungssensor umfassendes Multisensor-Koordinatenniessgerät (10), wobei
- in einer das Koordinatenmessgerät steuernden Datenverarbeitungseinrichtung (18) ein Soll-Datensatz wie CAD-Datensatz (20) eines zu messenden Objekts (12) eingelesen wird,
- zum Erzeugen des Messprogramms der Soll-Datensatz als Prüfplan derart automatisch abgearbeitet wird, dass aufgrund von in der Datenverarbeitungseinrichtung abgelegter vordefinierter Regeln (22) in den Prüfplan definierte Maße wie Abstände oder Winkel und/oder geometrische Eigenschaften (46, 48, 50, 52, 54) als die Werte automatisch abgearbeitet werden und
- die Reihenfolge der zu prüfenden Maße und/oder Geometrieelemente des Objekts automatisch aus Zeichnungsdaten des Soll-Datensatzes generiert wird,
**dadurch gekennzeichnet,**
**dass** bei nicht definierten Randbedingungen eine Zwangsführung zur Abarbeitung des Prüfplans derart erfolgt, dass dem Bediener eine mögliche Auswahl von zur Verfügung stehenden Entscheidungen durch das Koordinatenmessgerät (10) zur Wahl vorgelegt wird.

2. Verfahren nach Anspruch 1,
**dadurch gekennzeichnet,**
**dass** alle notwendigen Informationen zur Abarbeitung des Prüfplanes vorab zusätzlich in dem Soll-Datensatz wie CAD-Datensatz (20) der ein separates Datenfile eingegeben werden.

3. Verfahren nach Anspruch 1 oder 2,
**dadurch gekennzeichnet,**
**dass** Parameter zur automatischen Steuerung des Priifplanablaufes in einem der Koordinatenmessmaschinenkonfiguration zugeodneten Datenfile vorliegen

4. Verfahren nach zumindest einem der vorhergehenden Ansprüche,
**dadurch gekennzeichnet;**
**dass** Parameter zur automatischen Steuerung des Prüfplanablaufes in Teilegruppen zugeordneten Datenfiles vorliegen.

5. Verfahren nach zumindest einem der vorhergehenden Ansprüche,
**dadurch gekennzeichnet,**
**dass** die Reihenfolge der prüfenden Merkmale und Geometrieelemente (46, 48, 50, 52, 54) aus der Lage am Objekt (12) generiert wird.

6. Verfahren nach zumindest einem der vorhergehenden Ansprüche,
**dadurch gekennzeichnet,**
**dass** die Sensorauswahl wie Taster, Laser, Bildverarbeitung (36, 38, 40, 42, 44, 56, 58, 60, 62) aus den Soll-Daten wie CAD-Daten (20) automatisch generiert wird.

7. Verfahren nach zumindest einem der vorhergehenden Ansprüche,
**dadurch gekennzeichnet,**
**dass** die Sensorauswahl aus der Orientierung von Geometrieelementen (46, 48, 50, 52, 54) in Soll-Datenfile wie CAD-Datenfile (20) gewonnen wird.

8. Verfahren nach zumindest einem der vorhergehenden Ansprüche,
**dadurch gekennzeichnet,**
**dass** Vergrößerung optischer Sensoren (40, 58) aus der Merkmalsgröße und/oder Toleranz generiert wird.

9. Verfahren nach zumindest einem der vorhergehenden Ansprüche,
**dadurch gekennzeichnet,**
**dass** Tastelementdurchmesser des oder der mechanischen Taster (36, 38, 56) aus den Geometriedaten generiert wird.

10. Verfahren nach zumindest einem der vorhergehenden Ansprüche,
**dadurch gekennzeichnet,**
**dass** Antastpunktzahl aus Messaufgabe wie Maß, Form, Lage und/oder Größe eines Geometrieelementes generiert wird.

11. Verfahren nach zumindest einem der vorhergehenden Ansprüche,
**dadurch gekennzeichnet,**
**dass** Drehschwenkposition von Tasterdrehschwenkgelenken aus Lage und/oder Orientierung von anzutastenden Geometrieelementen (46, 48, 50, 52, 54) automatisch ermittelt wird.

12. Verfahren nach zumindest einem der vorhergehenden Ansprüche,
**dadurch gekennzeichnet,**
**dass** Beleuchtung bei einem oder mehreren optischen Sensoren (40, 58) aus der Orientierung der Geometrieelemente (46, 48, 50, 52, 54) und/oder aus Vorhandensein von Durchbrüchen angewandt
und/oder eingestellt wird.

13. Verfahren nach zumindest einem der vorhergehenden Ansprüche,
**dadurch gekennzeichnet,**
**dass** Antastgeschwindigkeit bei Einsatz von mechanischen Tastern (36, 38, 56) und/oder Lasertastern (42, 62) zur Teiletoleranz generiert wird.

14. Verfahren nach zumindest einem der vorhergehenden Anspruche,
**dadurch gekennzeichnet,**
**dass** die automatische Generierung des Messprogramms im Offlinemodus der Koordinatenmessgeräte-Software erfolgt.

15. Verfahren nach zumindest einem der vorhergehenden Ansprüche,
**dadurch gekennzeichnet,**
**dass** zur Überwachung des Programmiervorganges ein schrittweises Abarbeiten möglich ist.

## Claims

1. Method of generating a measuring program (30) for a multi-sensor coordinate measuring device (10) which includes at least one image processing sensor, wherein
- in a data processing means (18), which controls the coordinate measuring device, a desired data record such as a CAD data record (20) of an object (12) to be measured is read-in,
- to produce the measuring program, the desired data record is automatically drafted as a test plan in such a manner that, because of predefined rules (22) stored in the data processing means, dimensions which are defined in the test plan, such as distances or angles and/or geometric properties (46, 48, 50, 52, 54), are automatically drafted as the values, and
- the sequence of the dimensions and/or of the geometric elements of the object to be tested is automatically generated from drawing data of the desired data record,
**characterised in that**, if boundary conditions are not defined, a compulsory guidance for drafting the test plan is effected in such a manner that, for selection purposes, the operator is given a possible choice of available decisions by the coordinate measuring device (10).

2. Method according to claim 1, **characterised in that** all of the required information for drafting the test plan is additionally inputted in advance in the desired data record, such as the CAD data record (20), or a separate data file is inputted therein.

3. Method according to claim 1 or 2, **characterised in that** parameters for the automatic control of the test plan development are present in a data file associated with the coordinate measuring machine configuration.

4. Method according to at least one of the preceding claims, **characterised in that** parameters for the automatic control of the test plan development are present in partial groups of associated data files.

5. Method according to at least one of the preceding claims, **characterised in that** the sequence of the testing features and geometric elements (46, 48, 50, 52, 54) is generated from the location on the object (42).

6. Method according to at least one the preceding claims, **characterised in that** the selection of sensors, such as scanners, lasers or image processing (36, 38, 40, 42, 44, 56, 58, 60, 62), is automatically generated from the desired data such as CAD data (20).

7. Method according to at least one of the preceding claims, **characterised in that** the sensor selection is obtained from the orientation of geometric elements (46, 48, 50, 52, 54) in desired data files such as CAD data files (20).

8. Method according to at least one of the preceding claims, **characterised in that** enlargement of optical sensors (40, 58) is generated from the size of the features and/or tolerance.

9. Method according to at least one of the preceding claims, **characterised in that** the scanning element diameter of the mechanical scanner or scanners (36, 38, 56) is generated from the geometric data.

10. Method according to at least one of the preceding claims, **characterised in that** the number of scanning points is generated from the measurement task, such as the dimension, form, location and/or size of a geometric element.

11. Method according to at least one of the preceding claims, **characterised in that** the rotary pivotal position of rotary pivotal scanner joints is automatically determined from the location and/or orientation of geometric elements (46, 48, 50, 52, 54) to be scanned.

12. Method according to at least one of the preceding claims, **characterised in that** illumination for one or more optical sensors (40, 58) is used and/or set from the orientation of the geometric elements (46, 48, 50, 52, 54) and/or from the presence of perforations.

13. Method according to at least one of the preceding claims, **characterised in that** the scanning speed is generated when mechanical scanners (36, 38, 56) and/or laser scanners (42, 62) are used for part tolerance.

14. Method according to at least one of the preceding claims, **characterised in that** the automatic generation of the measuring program is effected in the off-line mode of the coordinate measuring device software.

15. Method according to at least one of the preceding claims, **characterised in that** a stepwise drafting process is possible for monitoring the programming operation.

## Revendications

1. Procédé pour générer un programme de mesure (30) pour un appareil de mesure de coordonnées à capteurs multiples (10) comprenant au moins un capteur de traitement d'image, selon lequel
- un ensemble de données de consigne tels qu'un ensemble de données CAO (20) d'un objet à mesurer (12) est lu dans un dispositif de traitement de données (18) commandant l'appareil de mesure de coordonnées,
- l'ensemble de données de consigne est traité automatiquement en forme de plan de contrôle pour générer le programme de mesure, de sorte que sur la base de règles (22) prédéfinies stockées dans le dispositif de traitement de données, des mesures définies dans le plan de contrôle telles que des distances ou des angles et/ou des caractéristiques géométriques (46, 48, 50, 52, 54) sont traitées automatiquement en tant que valeurs, et
- l'ordre des mesures et/ou des éléments géométriques de l'objet à contrôler est généré automatiquement à partir de données de signature de l'ensemble de données de consigne,
**caractérisé en ce qu'**
en présence de conditions marginales non définies on effectue un guidage forcé pour l'exécution du plan de contrôle de sorte qu'une sélection possible de décisions disponibles soit présentée au choix de l'utilisateur par l'appareil de mesure de coordonnées (10).

2. Procédé selon la revendication 1,
**caractérisé en ce que**
toutes les informations nécessaires pour l'exécution du plan de contrôle sont introduites préalablement en plus dans l'ensemble de données de consigne tel qu'un ensemble de données CAO (20) ou un fichier de données séparé.

3. Procédé selon la revendication 1 ou 2,
**caractérisé en ce que**
des paramètres pour la commande automatique du déroulement du plan de contrôle sont présents dans un fichier de données associé à la configuration de l'appareil de mesure de coordonnés.

4. Procédé selon au moins l'une quelconque des revendications précédentes,
**caractérisé en ce que**
des paramètres pour la commande automatique du déroulement du plan de contrôle sont présents dans des fichiers de données associés à des groupes de pièces.

5. Procédé selon au moins l'une quelconque des revendications précédentes,
**caractérisé en ce que**
l'ordre des caractéristiques et des éléments géométriques (46, 48, 50, 52, 54) est généré à partir de la position sur l'objet (12).

6. Procédé selon au moins l'une quelconque des revendications précédentes,
**caractérisé en ce que**
le choix de capteurs tels que palpeur, laser, traitement d'image (36, 38, 40, 42, 44, 56, 58, 60, 62) est généré automatiquement à partir des données de consigne telles que des données CAO (20).

7. Procédé selon au moins l'une quelconque des revendications précédentes,
**caractérisé en ce que**
le choix de capteurs est obtenu à partir de l'orientation d'éléments géométriques (46, 48, 50, 52, 54) dans un fichier de données de consigne tel qu'un fichier de données CAO (20).

8. Procédé selon au moins l'une quelconque des revendications précédentes,
**caractérisé en ce qu'**
un agrandissement de capteurs optiques (40, 58') est généré à partir de la grandeur caractéristique et/ou de la tolérance.

9. Procédé selon au moins l'une quelconque des revendications précédentes,
**caractérisé en ce que**
le diamètre d'élément palpeur du ou des palpeurs mécaniques (36, 38, 56) est généré à partir des données géométriques.

10. Procédé selon au moins l'une quelconque des revendications précédentes,
**caractérisé en ce que**
le nombre de points de palpage est généré à partir d'un paramètre de mesure tel que les dimensions, la forme, la position et/ou la taille d'un élément géométrique.

11. Procédé selon au moins l'une quelconque des revendications précédentes,
**caractérisé en ce que**
la position de pivotement rotatif d'articulations de pivotement rotatif de palpeurs est déterminée automatiquement à partir de la position et/ ou de l'orientation d'éléments géométriques (46, 48, 50, 52, 54) à palper.

12. Procédé selon au moins l'une quelconque des revendications précédentes,
**caractérisé en ce que**
l'éclairage pour un ou plusieurs capteurs optiques (40, 58) est utilisé et/ou réglé en fonction de l'orientation des éléments géométriques (46, 48, 50, 52, 54) et/ou de la présence de passages.

13. Procédé selon au moins l'une quelconque des revendications précédentes,
**caractérisé en ce que**
lors de l'utilisation de palpeurs mécaniques (36, 38, 56) et/ou de palpeurs laser (42, 62) la vitesse de palpage est générée par rapport à la tolérance de la pièce.

14. Procédé selon au moins l'une quelconque des revendications précédentes,
**caractérisé en ce que**
la génération automatique du programme de mesure s'effectue en mode off line du logiciel de l'appareil de mesure de coordonnées.

15. Procédé selon au moins l'une quelconque des revendications précédentes,
**caractérisé en ce que**
pour surveiller le processus de programmation, une exécution par paliers est possible.
